# EUROPÄISCHE PATENTSCHRIFT

(11) **EP 2 435 169 B1**
(45) Veröffentlichungstag und Bekanntmachung des Hinweises auf die Patenterteilung: **09.07.2014**
(21) Anmeldenummer: 10722305.9
(22) Anmeldetag: 19.05.2010
(51) Int. Cl.: B01D 69/02, B01D 67/00, B01D 65/10, G01M 3/40

(54) **MEMBRAN MIT MITTELN ZUR ZUSTANDÜBERWACHUNG**
MEMBRANE HAVING MEANS FOR STATE MONITORING
MEMBRANE COMPORTANT DES ÉLÉMENTS DE CONTRÔLE D'ÉTAT

(30) Priorität: 27.05.2009 DE 102009022913
(43) Veröffentlichungstag der Anmeldung: 04.04.2012
(73) Patentinhaber: Airbus Operations GmbH, 21129 Hamburg (DE)
(72) Erfinder: FRIEDBERGER, Alois, 85667 Oberpframmem (DE); HELWIG, Andreas, 80469 München (DE); MÜLLER, Gerhard, 85567 Grafing (DE)
(74) Vertreter: UEXKÜLL & STOLBERG
(86) Internationale Anmeldenummer: PCT/EP2010/003072
(87) Internationale Veröffentlichungsnummer: WO 2010/136148

(56) Entgegenhaltungen:
- EP-A2- 1 441 209
- WO-A2-2005/105276
- DE-A1- 19 926 372
- US-B1- 6 541 676

## Beschreibung

Die Erfindung betrifft eine Membran. Die Anwendung von undurchlässigen oder teildurchlässigen Membranen in der Technik sind vielfältig. Insbesondere teildurchlässige Membrane weisen häufig Löcher oder Durchbrüche mit einem bestimmten Durchmesser auf, um Stoffe mit geringerem Partikeldurchmesser passieren zu lassen aber Stoffe mit größerem Partikeldurchmesser zurückzuhalten. Derartige Membrane unterliegen vor allem an den Löchern einem Verschleiß, d.h. es bilden sich Risse, die von einem Loch ausgehend durch die Membran wachsen. Insbesondere bei mikromechanischen Membranen mit Löchern von geringem Durchmesser im Bereich 1 µm und kleiner ist die Erfassung des Zustands der Membran, insbesondere ob diese Risse aufweist, sehr schwierig. Membrane mit Rissen lassen dann unerwünschterweise auch solche Partikel passieren, die eigentlich zurückgehalten werden sollten. Gerade bei Anwendungen im medizinischen oder hygienischen Bereich kann es dann zur Beeinträchtigung der Funktion kommen. Beispielsweise bei einem Wasserfilter, der Bakterien mit einem Partikeldurchmesser von ca. 1 µm durch einen Lochdurchmesser von 450 nm zurückhalten sollte, würden diese bei einem Riss zwischen benachbarten Löchern passieren können. Aufgrund der geringen Strukturgröße ist es schwierig, derartige mikroskopische Risse festzustellen.

Aus WO 2005/105276 A2 ist eine Membran bekannt, die beispielsweise aus Silizium besteht und Löcher aufweist, zwischen denen in Längs- und Querrichtung Leiterbahnen mit einer Dicke von 50 bis 500 nm und einer Breite von 200 bis 300 nm angeordnet sind. Mit Hilfe dieser Leiterbahnen können bei lokalen Brüchen durch einen erhöhten Widerstand das Auftreten und die Lage solcher Beschädigungen nachgewiesen werden.

Die EP 1 441 209 A2 offenbart eine Gaspermeationsmembrananordnung, die eine Vielzahl über eine Fläche verteilter und voneinander beabstandeter Membraninseln aufweist. Auf der Fläche ist ein Heizleiter in der Weise mit einem mäanderförmigen Verlauf aufgebracht, dass er über jede der Membraninseln verläuft.

Aus US 6,541,676 B1 ist eine Gaspermeationsmembran bekannt, die auf einem Substrat mit Poren angeordnet ist, die in einem bestimmten Bereich konzentriert sind. Um den Bereich herum ist mäanderförmig ein Heizleiter vorgesehen, dessen Breite größer als der Durchmesser der Poren ist.

Aufgabe der Erfindung ist es daher, eine einfach herzustellende Membran bereitzustellen, deren Zustand feststellbar ist. Es sollen also insbesondere Risse oder andere funktionsbeeinträchtigende Schadstellen zuverlässig feststellbar sein.

Erfindungsgemäß wird diese Aufgabe durch die im Anspruch 1 angegebenen Merkmale gelöst. Vorteilhafte Weiterbildungen ergeben sich aus den Unteransprüchen.

Die Erfindung ermöglicht die Überwachung des Zustandes der Membran (also ob diese funktionsfähig bzw. intakt ist) durch Erfassung des elektrischen Stromes durch die mindestens eine Leiterbahn. Dazu ist die mindestens eine Membran zumindest an den besonders rissgefährdeten Bereichen oder aber über der gesamten Membranfläche mit einer oder mehreren Leiterbahnen bedeckt. Diese Leiterbahnen sind dazu sehr dünn und empfindlich gestaltet, damit diese sofort unterbrochen werden, wenn diese vom Riss erreicht werden.

Wenn sich ein Riss gebildet hat, wird dieser also ab einer gewissen Größe bzw. Erstreckung die Leiterbahn erreichen und durchtrennen. Damit fließt kein oder fast kein Strom mehr und eine Fehlermeldung kann ausgegeben werden. Der Zustand der Membran kann auch über ein Detektionssystem gemäß der DE 10 2004 030 380 A1 überwacht werden.

Vorzugsweise wird eine einzige Leiterbahn vorgesehen sein, welche mäander- oder schleifenartig die Membranoberfläche zumindest teilweise oder aber komplett bedeckt. Es kann eine gleichmäßige Beabstandung der einzelnen Leiterbahnschleifen vorgesehen werden oder eine engere Führung an gefährdeten Stellen. Es können auch mehrere elektrisch parallelgeschaltete Leiterbahnen vorgesehen sein. Außerhalb des Membranbereichs sind Kontakte vorgesehen, die mit der Leiterbahn kommunizieren und über die ein Detektionssystem mit der Leiterbahn elektrisch kontaktiert ist. Hierzu eignen sich insbesondere gefederte Kontaktstifte welche durch einen Dichtring, der über die Leiterbahn verläuft, vor dem flüssigen Medium geschützt sind.

Vorzugsweise hat die mindestens eine Leiterbahn eine Dicke von 10 - 1000 nm, vorzugsweise 20 - 100 nm. Damit ist sichergestellt, dass die Leiterbahn einer Rissfortbildung keinen wesentlichen Widerstand entgegensetzt, welche sonst zu einer Rissfortbildung entlang der (parallel zur) Leiterbahn führen könnte, wodurch ein Riss wachsen könnte, ohne dass dies erfasst wird.

Vorzugsweise hat die mindestens eine Leiterbahn eine Breite von 50 nm - 100 µm, vorzugsweise 100 nm - 500 nm. Damit ist eine Anordnung der Leiterbahn zwischen den häufig eng angeordneten Löchern in einer Membran möglich.

Vorzugsweise ist die mindestens eine Leiterbahn mit einer Passivierungsschicht versehen, vorzugsweise aus SiO₂, Si₃N₄, Diamant bzw. Diamant-ähnlichen Schichten, Polymeren wie Polycarbonat oder SiC. Damit ist sichergestellt, dass diese nicht vom Medium angegriffen wird, das die Membran umströmt, wodurch Fehlanzeigen vermieden werden.

Eine bevorzugte Weiterbildung der Erfindung sieht vor, dass uf beiden Seiten der Membran mindestens eine Leiterbahn angeordnet ist. Dies ermöglicht entweder eine großzügigere Anordnung jeder der beiden Leiterbahnen ohne eine Beeinträchtigung der Überwachungsfunktion. Es ist dabei zweckmäßig, wenn die Leiterbahnen auf beiden Seiten mehr oder wenig quer zueinander verlaufen und auf diese Weise beispielsweise über zwei einfach zu fertigende Leiterbahnreihen, die jeweils aus parallelen Leiterbahnabschnitten bestehen, aber die Leiterbahnabschnitte beider Seiten senkrecht zueinander stehen, läßt sich ein engmaschiges Leiterbahnnetz bilden. Dies ist insbesondere von Vorteil, wenn regelmäßig angeordnete Löcher eng zu umschließen sind.

Alternativ kann eine Membran mit einer Anzahl Löcher auch mit einer Leiterbahn versehen sein, die sich schlangenlinien- oder wellenartig um die Löcher schmiegt.

Es ist in jedem Fall vorgesehen, dass bei einer Membran mit Löchern die Leiterbahn eine größere Breite aufweist als die Löcher. Die Fertigung einer solchen Membran wird am zweckmäßigsten dadurch erfolgen, dass zunächst die mindestens eine Leiterbahn auf der Membran vorgesehen wird und anschließend die Löcher ausgebildet werden. Dann kann die Löcheranordnung relativ willkürlich zum Verlauf der Leiterbahn erfolgen, da selbst die Anordnung von Löchern direkt in den Leiterbahnbereichen nicht zu einer Unterbrechung derselben führt. Alternativ können zuerst die Löcher und erst dann die Leiterbahn ausgebildet werden. Insbesondere bei kleinen Lochdurchmessern ist deren störender Einfluss auf weitere Herstellungsprozesse noch geringer und es ist möglich, auch noch nach der Ausbildung der Löcher die Leiterbahn aufzubringen und fotolithografisch oder anderweitig zu strukturieren.

Noch eine bevorzugte Weiterbildung der Erfindung sieht vor, dass die Membran aus einem Material besteht, das durch gezielte n- und/oder p-Dotierung (Grunddotierung) leitfähig machbar ist und die mindestens eine Leiterbahn als gezielte Dotierung (im Gegensatz zur Grunddotierung) der Membran an den Stellen gebildet ist, wo die mindestens eine Leiterbahn verlaufen soll. Geeignete Materialien sind insbesondere Halbleiter wie Silizium, Germanium, GaN, GaAlN, Diamant bzw. Diamant-ähnliche Schichten oder SiC.

Für die Herstellung einer erfindungsgemäßen Membran sind mehrere Verfahren möglich. Die drei notwendigen Schritte: (a) Membran herstellen, (b) Löcher fertigen, (c) Leiterbahnen aufbringen können in jeder beliebigen Reihenfolge nacheinander erfolgen aber besonders bevorzugt ist die Reihenfolge (c) (b) (a).

Die Erfindung wird anhand der beigefügten Zeichnungen weiter erläutert. Dabei zeigt:
- Fig. 1:: eine nicht erfindungsgemäße Membran mit einer Leiterbahn;
- Fig. 2:: eine weitere nicht erfindungsgemäße Membran mit einer Leiterbahn;
- Fig. 3:: einen Ausschnitt einer weiteren nicht erfindungsgemäßen Membran mit einer Leiterbahn;
- Fig. 4:: eine Ausführung einer erfindungsgemäßen Membran mit einer Leiterbahn;
- Fig. 5:: eine weitere nicht erfindungsgemäße Membran mit mehreren parallel geschalteten Leiterbahnen;
- Fig. 6:: eine nicht erfindungsgemäße Membran mit zwei quer zueinander laufenden Leiterbahnen;
- Fig. 7:: eine Ausführung einer erfindungsgemäßen Membran mit einer durch Dotierung gebildeten Leiterbahn.

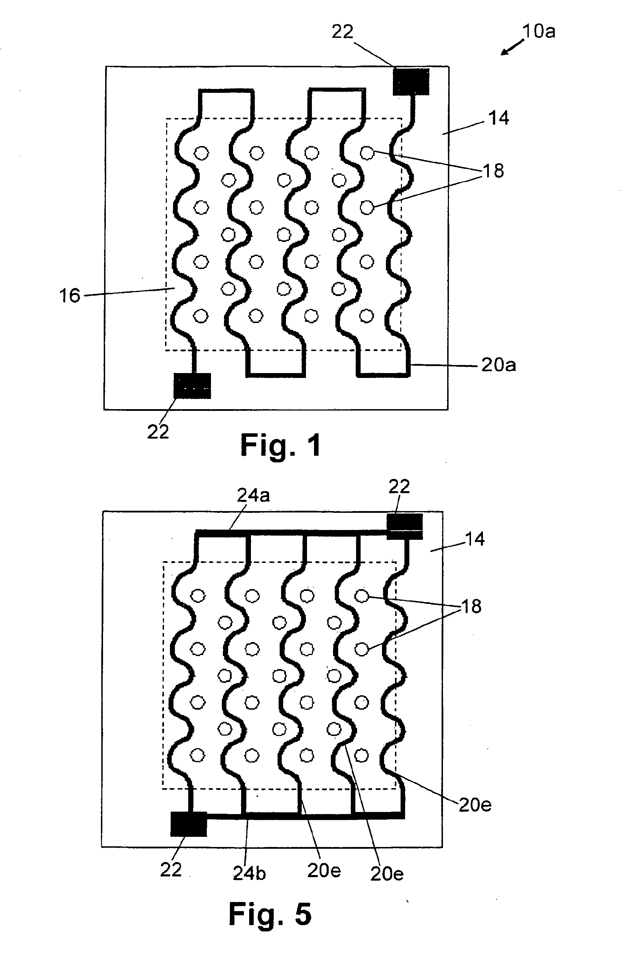

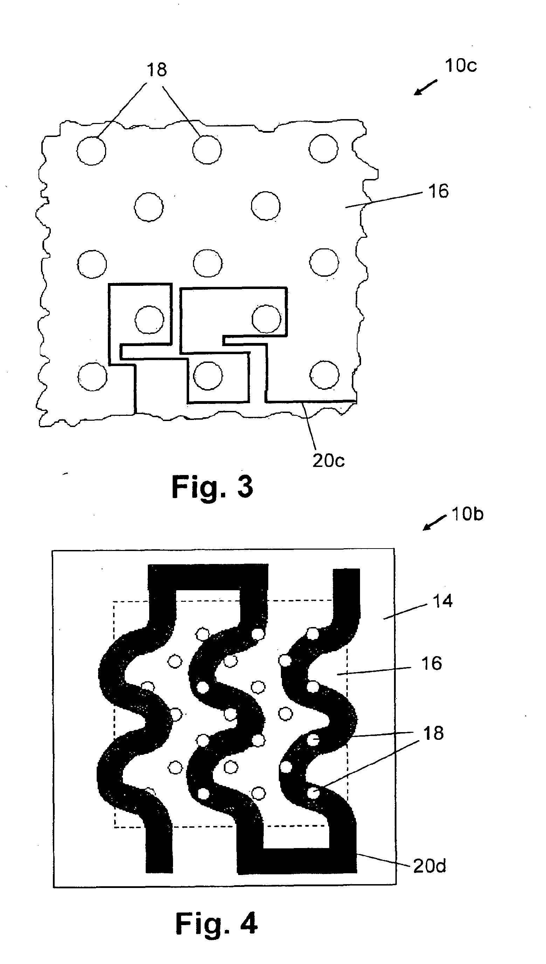

In den Figuren 1 bis 4 sind vier verschiedene Ausführungen von Membrananordnungen **10a - 10d** dargestellt, die jeweils aus einer Leiterbahn **20a - 20d** bestehen. Die Membrananordnungen der Figuren 1 bis sind dabei keine Ausführungsformen der Erfindung, sondern Beispiele, die das Verständnis der Erfindung erleichtern. Die Membrananordnungen umfassen bei diesen Beispielen jeweils einen Siliziumchip **14** von 5 x 5 mm aus einkristallinem Silizium mit einer Membrandicke von 1 µm. Durch die gestrichelten Rechtecke wird der eigentliche Membranbereich **16** definiert, in dem eine Anzahl Löcher **18** angeordnet sind. Die Löcher haben bei diesen Beispielen und dem bevorzugten Ausführungsbeispiel der Figur 4 jeweils einen Durchmesser von etwa 450 nm. Es können auch kleinere oder deutlich größere Löcher vorgesehen werden.

Bei dem Beispiel gemäß **Fig. 1** erstreckt sich eine Leiterbahn **20a** im wesentlichen über die gesamte Fläche des Membranbereichs **16** und zwar mäander- oder wellenartig in Anpassung an die Löcher **18.** Beidendig an der Leiterbahn **20a** sind Kontakte **22** vorgesehen, über die eine nicht gezeigte Detektoreinrichtung an die Leiterbahn **20a** anschließbar ist. Vorzugsweise misst diese Detektoreinrichtung den elektrischen Widerstand der Leiterbahn **20a.** Bei einer Rissbildung wird der Riss irgendwann die Leiterbahn **20a** erreichen und diese durchtrennen. Damit steigt der elektrische Widerstand der Leiterbahn **20a** an, was von der Detektoreinrichtung feststellbar ist. Diese kann beispielsweise ein Warnsignal erzeugen oder auch die mit der Membran versehene Vorrichtung außer Betrieb setzen.

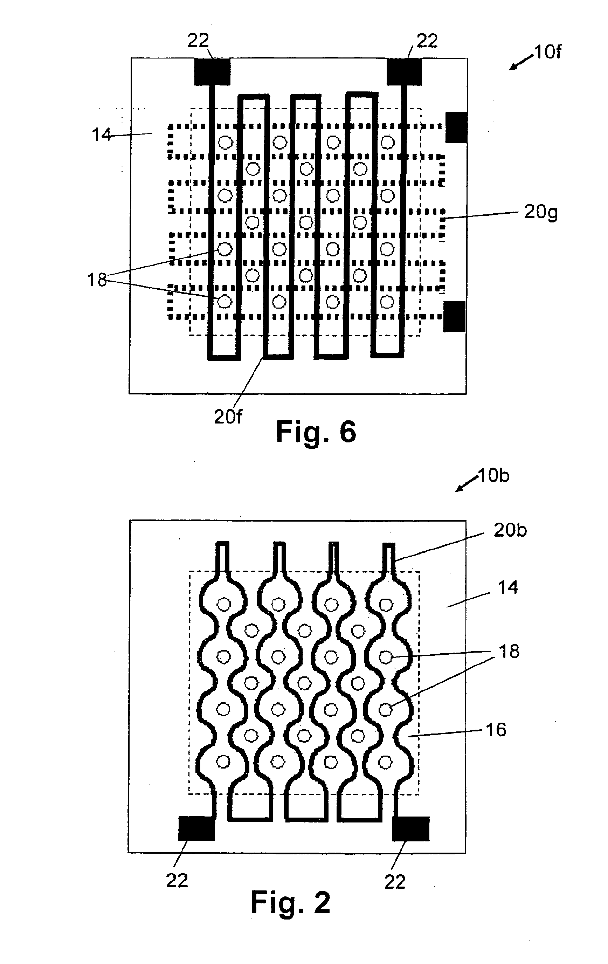

Das Beispiel gemäß **Fig. 2** ist der von Fig. 1 sehr ähnlich und unterscheidet sich von dem Beispiel gemäß Fig. 1 nur dadurch, dass die Leiterbahn **20b** in engeren Schleifen verläuft und sich damit enger an die Löcher **18** anschmiegt, so dass bereits bei einsetzender Rissbildung, also zu einem früheren Zeitpunkt als bei der Ausführung gemäß Fig. 1, der Membranzustand als beschädigt feststellbar ist.

**Fig. 3** zeigt ein Beispiel **10c,** bei der die Leiterbahn **20c** so angeordnet ist, dass die Löcher **18** einzeln vollständig umschlossen werden, so dass eine Rissausbildung zwischen benachbarten Löchern **18** zwangsläufig zu einer Rissdetektion führt. Dabei ist ein relativ komplexer Verlauf der Leiterbahn **20c** erforderlich.

**Fig. 4** zeigt eine andere Ausführung **10d,** die eine Ausführungsform der Erfindung ist und bei der die Leiterbahn **20d** eine deutlich größere Breite aufweist als die Durchmesser der Löcher **18.** Bei dieser Ausführung kann die Leiterbahn **20d** unabhängig von der Löcheranordnung **18** gewählt werden. Die Herstellung ist also einfacher, weil die Leiterbahn **20d** nicht genau an die Anordnung der Löcher **18** angepasst werden muss.

Die Herstellung kann vorzugsweise dadurch erfolgen, dass zunächst die Leiterbahn **20d** auf der Membran **16** aufgebracht wird und erst anschließend die Löcher **18** gefertigt werden. Denn selbst wenn einzelne Löcher **18** vollständig in die Leiterbahn **20d** fallen, bleibt diese leitfähig. Dabei sollte die Breite der Leiterbahn **20d** signifikant größer sein als der Durchmesser der Löcher **18,** vorzugsweise mindestens **150%** des Lochdurchmessers, damit bei der Fertigung nicht aus Versehen die Leiterbahn **20d** bereits unterbrochen wird. Die Leiterbahn **20d** wird vorzugsweise in engen Schleifen angeordnet sein, damit die nicht überdeckten Bereiche mit Löchern so klein wie möglich sind.

Das Beispiel gemäß **Fig. 5****,** das keine Ausführungsformen der Erfindung ist, sondern das Verständnis der Erfindung erleichtert, entspricht im wesentlichen dem von Fig. 1 mit dem Unterschied, dass mehrere schaltungstechnisch parallele Leiterbahnen **20e** vorgesehen sind, die zu Sammelleitungen **24a, 24b** führen, die mit den Kontakten **22** verbunden sind. Bei dieser Variante müssen die einzelnen Leiterbahnen **20e** einen vorgegebenen Leitungswiderstand aufweisen, denn als Fehler messbar ist nur die Änderung des Gesamtwiderstandes. Daher ist es zweckmäßig, wenn nicht zu viele parallele Leiterbahnen **20e** vorgesehen werden (vorzugsweise nicht mehr als etwa 5), weil dann die Erfassung einer Unterbrechung messtechnisch problematischer wird, denn der Widerstand ändert sich dann nur unwesentlich (Parallelschaltung von Widerständen), wenn eine der parallelen Leiterbahnen **20e** unterbrochen ist.

**Fig. 6** zeigt ein Beispiel **10f,** das keine Ausführungsformen der Erfindung ist, sondern das Verständnis der Erfindung erleichtert,, bei dem die Löcher **18** von zwei Leiterbahnen **20f, 20g** umgeben sind, wobei diese beiden Leiterbahnen **20f, 20g** quer, vorzugsweise senkrecht, zu- einander verlaufen und damit insbesondere jedes Loch **18** einzeln umschließen. Die beiden Leiterbahnen **20f, 20g** können, wie in Fig. 6 dargestellt, separat beschaltet werden oder aber elektrisch in Reihe oder parallel geschaltet sein. Die beiden Leiterbahnen **20f, 20g** können auf unterschiedlichen Seiten der Membran **14** angebracht sein oder aber auf der gleichen Seite und mittels einer dünnen elektrisch nichtleitenden Zwischenschicht voneinander getrennt sein.

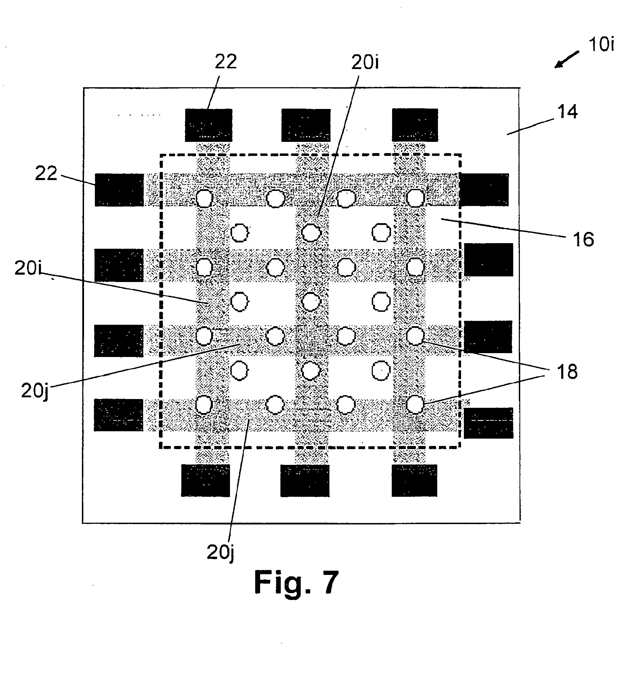

**Fig. 7** zeigt eine Ausführungsform **10i,** die eine Ausführungsform der Erfindung ist und bei der in eine Membran aus einem Halbleiter wie Silizium, Diamant, SiC, GaN, GaA1N oder Germanium Bahnen **20i** und **20j** n- oder p-dotierter Halbleiter gebildet werden, die damit leitfähig sind und - wie in Fig. 7 gezeigt - einzeln kontaktiert sein oder aber ähnlich den Ausführungen gemäß der vorherigen Zeichnungen miteinander verbunden sein können. Bei der in Fig. 7 gezeigten Ausführung sind ähnlich wie bei Fig. 4, die Leiterbahnen **20i, 20j** breiter als die Lochdurchmesser, was die Herstellung vereinfacht. Nicht erfindungsgemäß können alternativ die Leiterbahnen auch dünner ausgeführt und ähnlich der Fig. 1, 2, 3, 5 oder 6 angeordnet sein. Damit können n- und/oder p-leitfähige Bereiche erzeugt werden, die aufgrund von Raumladungszonen durch sperrende pn-Übergänge voneinander isoliert sind. Abhängig von der Breite der Leiterbahnen **20i, 20j** kommt es entweder zu einem kompletten Verlust der Leitfähigkeit oder zu einem signifikanten Anstieg des Widerstandes. Die Leitfähigkeit der Leiterbahnen 20i, 20j kann durch geeignetes Dotieren variiert werden Hierdurch kann die Sensitivität der Rissdetektion angepasst werden.

Die Erfindung eignet sich insbesondere für Anwendungen zur Biosensorik oder Reinigung von Fluiden, ohne dass dies beschränkend wäre. Die Erfindung läßt sich auf sehr großflächige Strukturen anwenden, da hierfür geeignete Herstellungsverfahren wie Laserstrukturierung zur Verfügung stehen.

## Patentansprüche

1. Membran, die mit mindestens einer stromdurchflossenen Leiterbahn (20d, 20i, 20j) versehen ist, die bei Beschädigung der Membran unterbrechbar ist, und bei der der Zustand der Membran (14) durch Erfassung des elektrischen Stromes durch die Leiterbahn (20d, 20i, 20j) bestimmbar ist, wobei die Membran (14) eine Anzahl Löcher (18) aufweist und die Leiterbahn (20d, 20i, 20j) eine größere Breite aufweist als die Löcher (18), **dadurch gekennzeichnet, dass** einzelne der Löcher (18) vollständig in die Leiterbahn (20d, 20i, 20j) fallen.

2. Membran nach Anspruch 1, **dadurch gekennzeichnet, dass** mindestens eine Leiterbahn (20d) schleifenartig auf der Membran (14) angeordnet ist und diese im Wesentlichen abdeckt.

3. Membran nach Anspruch 1, **dadurch gekennzeichnet, dass** die mindestens eine Leiterbahn (20d, 20i, 20j) eine Dicke von 10 nm - 100 µm, vorzugsweise 20 nm - 500 nm aufweist.

4. Membran nach Anspruch 1, **dadurch gekennzeichnet, dass** mindestens eine Leiterbahn (20d, 20i, 20j) eine Breite von 50 nm - 100 µm, vorzugsweise 100 nm - 500 nm aufweist.

5. Membran nach Anspruch 1, **dadurch gekennzeichnet, dass** die mindestens eine Leiterbahn (20d, 20i, 20j) mit einer Passivierungsschicht versehen ist.

6. Membran nach einem der vorherigen Ansprüche, **dadurch gekennzeichnet, dass** die mindestens eine Leiterbahn (20d) mäanderartig angeordnet ist.

7. Membran nach einem der vorherigen Ansprüche, **dadurch gekennzeichnet, dass** auf beiden Seiten der Membran (14) mindestens eine Leiterbahn angeordnet ist.

8. Membran nach Anspruch 1, **dadurch gekennzeichnet, dass** die Membran (14) aus einem Material besteht, das durch gezielte n- oder p-Dotierung leitfähig machbar ist und die mindestens eine Leiterbahn (20i, 20j) als bereichsweise Dotierung der Membran (14) gebildet ist.

9. Membran nach Anspruch 8, **dadurch gekennzeichnet, dass** die Membran (14) aus Silizium, Germanium, GaN, GaAlN, Diamant, Diamant-ähnlichem Material oder SiC besteht.

10. Verfahren zur Herstellung einer Membran (14) nach einem der vorhergehenden Ansprüche, bei dem zunächst die Leiterbahn (20d, 20i, 20j) auf der Membran (14) aufgebracht wird und anschließend die Löcher (18) gefertigt werden.

## Claims

1. A membrane which is provided with at least one current-carrying conductor (20d, 20i, 20j), which can be interrupted upon damage to the membrane, and in which the state of the membrane (14) can be determined by detecting the electric current through the conductor (20d, 20i, 20j), wherein said membrane (14) has a number of holes (18) and the conductor (20d, 20i, 20j) has a larger width than the holes (18), **characterized in that** individual ones of the holes (18) fall completely into the conductor (20d, 20i, 20j).

2. The membrane according to claim 1, **characterized in that** at least one conductor (20d) is arranged in a loop-like manner on the membrane (14) and substantially covers the latter.

3. The membrane according to claim 1, **characterized in that** the at least one conductor (20d, 20i, 20j) has a thickness of 10 nm - 100 µm, preferably 20 nm - 500 nm.

4. The membrane according to claim 1, **characterized in that** the at least one conductor (20d, 20i, 20j) has a width of 50 nm - 100 µm, preferably 100 nm - 500 nm.

5. The membrane according to claim 1, **characterized in that** the at least one conductor (20d, 20i, 20j) is provided with a passivation layer.

6. The membrane according to any of the preceding claims, **characterized in that** the at least one conductor (20d) is arranged in a meander-like manner.

7. The membrane according any of the preceding claims, **characterized in that** at least one conductor is arranged on both sides of the membrane (14).

8. The membrane according to claim 1, **characterized in that** the membrane (14) consists of a material which can be made conductive by selective n- or p-type doping, and the at least one conductor (20i, 20j) is formed as doping of the membrane (14) in certain areas.

9. The membrane according to claim 8, **characterized in that** the membrane (14) consists of silicon, germanium, GaN, GaAlN, diamond, diamond-like material or SiC.

10. A method for producing a membrane (14) according to any of the preceding claims, wherein at first the conductor (20d, 20i, 20j) is applied to the membrane (14) and subsequently the holes (18) are formed.

## Revendications

1. Membrane munie d'au moins une piste conductrice (20d, 20i, 20j), traversée par un courant, qui peut être interrompue en cas d'endommagement de la membrane et dans laquelle l'état de la membrane (14) peut être déterminé par la mesure du courant électrique traversant la piste conductrice (20d, 20i, 20j), la membrane (14) comprenant un certain nombre de trous (18) et la piste conductrice (20d, 20i, 20j) présentant une largeur supérieure aux trous (18), **caractérisée en ce que** certains des trous (18) tombent entièrement dans la piste conductrice (20d, 20i, 20j).

2. Membrane selon la revendication 1, **caractérisée en ce qu'**au moins une piste conductrice (20d) est disposée sous la forme d'une boucle sur la membrane (14) et recouvre sensiblement celle-ci.

3. Membrane selon la revendication 1, **caractérisée en ce que** l'au moins une piste conductrice (20d, 20i, 20j) présente une épaisseur de 10 nm à 100 µm, de préférence de 20 nm à 500 nm.

4. Membrane selon la revendication 1, **caractérisée en ce que** l'au moins une piste conductrice (20d, 20i, 20j) présente une largeur de 50 nm à 100 µm, de préférence de 100 nm à 500 nm.

5. Membrane selon la revendication 1, **caractérisée en ce que** l'au moins une piste conductrice (20d, 20i, 20j) est munie d'une couche de passivation.

6. Membrane selon l'une des revendications précédentes, **caractérisée en ce que** l'au moins une piste conductrice (20d) est disposée de façon à former des méandres.

7. Membrane selon l'une des revendications précédentes, **caractérisée en ce que**, sur les deux côtés de la membrane (14), se trouve au moins une piste conductrice.

8. Membrane selon la revendication 1, **caractérisée en ce que** la membrane (14) est constituée d'un matériau qui peut être rendu conducteur grâce à un dopage n ou p ciblé et l'au moins une piste conductrice (20i, 20j) est formée grâce au dopage de certaines zones de la membrane (14).

9. Membrane selon la revendication 8, **caractérisée en ce que** la membrane (14) est constituée de silicium, de germanium, de GaN, de GaAlN, de diamant, d'un matériau de type diamant ou de SiC.

10. Procédé de fabrication d'une membrane (14) selon l'une des revendications précédentes, dans lequel la piste conductrice (20d, 20i, 20j) est d'abord appliquée sur la membrane (14), puis les trous (18) sont réalisés.
